Europäisches Patentamt

(19) European Patent Office

Office européen des brevets

(11) Veröffentlichungsnummer: **0 044 405**
**B1**

(12) **EUROPÄISCHE PATENTSCHRIFT**

(45) Veröffentlichungstag der Patentschrift:
26.02.86

(51) Int. Cl.⁴: **D 01 D 5/24,** B 01 D 13/04

(21) Anmeldenummer: **81104577.2**

(22) Anmeldetag: **13.06.81**

(54) **Hohlfasermembran für die Plasmaseparation und Verfahren zur Herstellung der Hohlfasermembran.**

(30) Priorität: **15.07.80 DE 3026718**

(43) Veröffentlichungstag der Anmeldung:
**27.01.82 Patentblatt 82/4**

(45) Bekanntmachung des Hinweises auf die Patenterteilung:
**26.02.86 Patentblatt 86/9**

(84) Benannte Vertragsstaaten:
**AT BE CH FR GB IT LI LU NL SE**

(56) Entgegenhaltungen:
**DE - A - 2 833 493**
**GB - A - 1 558 856**

(73) Patentinhaber: **Akzo GmbH,**
**Postfach 10 01 49 Kasinostrasse 19-23,**
**D-5600 Wuppertal-1 (DE)**

(72) Erfinder: **Gerlach, Klaus, Dr. Dipl.-Chem.,**
**Friedenstrasse 30, D-8750 Aschaffenburg-Obernau (DE)**
Erfinder: **Kessler, Erich, Breubergweg 33,**
**D-6128 Hoechst (DE)**
Erfinder: **Henne, Werner, Dr. Dipl.-Chem.,**
**Winterbergstrasse 46, D-5600 Wuppertal 2 (DE)**

**Beschreibung**

Die Erfindung betrifft poröse Hohlfasermembranen für die Plasmaseparation, d.h. Plasmaphorese von Blut, insbesondere vom menschlichem Blut un ein Verfahren zu deren Herstellung.

Die medizinische Forschung widmet sich, insbesondere auch um die therapeutischen Behandlungsmethoden verbessern zu können, in zunehmendem Maße der Frage, aus welchen Bestandteilen das Blut besteht. Dabei interessiert sowohl die quantitative als auch die qualitative Blutzusammensetzung und deren Veränderungen, sei es aufgrund von Krankheiten oder sonstigen Einflüssen und ihre Beeinflussung mittels Eliminationsverfahren, deren typischstes Beispiel die Hämodialyse ist.

Die Hämodialyse mittels der künstlichen Niere hat in den letzten 15 Jahren einen unvergleichlich starken Anstieg erlebt und das Leben von Nierenkranken und auch derjenigen, die durch einen bestimmten Umstand bedingt ihre Nieren verloren haben, erheblich verlängert. Viele Menschen verdanken ihr Leben allein dem Funktionieren einer Membrane zur Elimination von Stoffwechselabbauprodukte aus dem Blut mittels Dialyse.

Diese chemisch hergestellten semipermeablen Membranen, deren bedeutendste die Cuprophanmembrane, bestehend aus regenerierter Cellulose, ist, ahmt den Trennvorgang von natürlichen Membranen innerhalb des menschlichen Körpers in angenäherter Form soweit nach, daß sie ein ausgefallenes, krankes, unterfunktionelles Organ ersetzen kann.

Die Konzentrationsdifferenz der sogenannten Metabolite zwischen der Blutzeite und der Wasserseite der Membran sorgt für die ständige Diffusion der Substanz aus dem Blut heraus, deren Molekülgröße durch die Art der Porosität der Dialysemembran bestimmt wird. Das gleiche Prinzip herrscht in unzähligen Zell- und Organmembranen im menschlichen Körper.

Die Nephrologen haben dabei das Verfahren des extrakorporablen Blutkreislaufs, d.h. der Ausdehnung des menschlichen Blutkreislaufs auf einen Zweig außerhalb des Körpers beherrschen gelernt und somit die Voraussetzungen geschaffen für ein weitergehendes Eliminationsverfahren wie das der Hämofiltration.

Bei der Hämofiltration durch eine künstliche Niere werden die Metabolite durch Druckfiltration über eine Membrane dadurch entfernt, daß das Filtrat, in dem sich die durch die Membrane hindurchgetretenen Metabolite befinden, in großen Mengen, z.B. 20 l verworfen wird. Die große Filtratmenge muß als physiologische Kochzalzlösung weitgehend ersetzt werden, um das Blut vor einer unerträglichen Eindickung zu bewahren.

In beiden Fällen, d.h. bei der Hämodialyse und der Hämofiltration darf die Membran allerdings keine Eiweißstoffe passieren lassen, deren häufigster Vertreter das Albumin ist (Molgewicht ca. 68.000), d.h. sie muß für diese Molekülgröße dicht sein.

Die medizinische Forschung hat erkannt, daß sehr viele Krankheiten durch Toxine verursacht werden, die oft an Proteine (Eiweißstoffe) gebunden sind. Sie selbst sind oft kleine Moleküle, die die genannten Dialyse- und Hämofiltrationsmembranen leicht passieren würden, wenn sie frei vorlägen.

Durch eine Proteinbindung stellen sie aber so große Moleküle dar, die durch obige Membranen nicht eliminiert werden können; dazu zählen auch Immunkomplexe und Antigene.

Um solche proteingebundene Toxine im Molekulargewichtsbereich zwischen etwa 100.000 und 3 Millionen zu entfernen, gab es bisher nur das Verfahren der Plasmaseparation mittels Ultrazentrifuge. Man entnahm dem Patienten eine zulässige Menge Blut in einen Beutel, gab den Inhalt in eine Ultrazentrifuge und trennte die zellulären Bestandteile vom Blutplasma ab. Die zellulären Bestandteile wie rote und weiße Blutkörperchen sowie die Blutplättchen wurden nach Verdünnung dem Patienten wieder zurückgegeben, das Plasma einschließlich der gelösten Bestandteile verworfen und auf diese Weise die toxischen Substanzen eliminiert.

Das gleiche Verfahren wird u.a. auch jetzt noch an gesunden Blutspendern angewandt, um Plasma zum Zwecke des Plasmaaustausches an Patienten zu gewinnen.

Die Blutseparation in Zellen und Plasma hat somit zwei verschiedene Anwendungsbereiche, nämlich die Elimination von proteingebundenen Toxinen und die Plasmagewinnung zum Plasmaaustausche.

Für die beiden genannten Einsatzgebiete wäre es wünschenswert, eine extrakorporale Hämofiltration am Patienten oder Spender vorzunehmen, die es ermöglicht Plasma abzutrennen, das noch alle gelösten Stoffe enthält und dem Patienten oder Spender die Fraktion, in der sich die Zellbestandteile des Blutes befinden, direkt wieder in den Blutkreislauf zurückzuführen. Dies setzt allerdings voraus, daß es Membranen gibt, die eine Durchlässigkeitsgrenze erste bei einem Molekulargewicht von ca. 3 Millionen aufweisen.

Es gibt einige wenige Membrantypen, die zu diesem Zweck herangezogen werden, wie die Zelluloseacetat,—die Zellulosenitrat—und die Polyvinylalkoholmembrane. Diese haben jedoch eine gebremste oder besser gesamt lediglich partielle Durchlässigkeit für die erwähnten Proteine. Die Durchlässigkeit läßt sich ausdrücken durch den sogenannten Siebkoeffizienten.

$$S = \frac{C_F}{C_B}$$

$C_F$ = Konzentration der Substanz $\times$ in Filtrat
$C_B$ = Konzentration der Substanz $\times$ im Blut

Die Ermittlung des Siebkoeffizienten kann z.B.

durch lasernephelometrische Methoden geschehen.

Wenn S=1, dann herrscht vollständige, wenn S kleiner 1, dann herrscht partielle Durchlässigkeit. Die zur Zeit zur Verfügung stehenden Membranen besitzen Siebkoeffizienten, die schon für Albumin kleiner als 0,8 sind. Dies bedeutet, daß die Elimination der abzutrennenden Bestandteile nur in verringertem Maße stattfindet; es ist deshalb eine längere Behandlungszeit erforderlich. Auch muß man mit höheren Mengen an Rückinfusionen arbeiten oder man muß sehr große Membranen einsetzen, was erhebliche Nachteile mit sich bringt, da die Module sodann ein sehr hohes extrakorporales Volumen aufweisen.

Es besteht deshalb ein Bedürfnis nach Membranen, welche die obengenannten Nachteile nicht aufweisen.

Aufgabe der Erfindung ist es deshalb, eine Membran zu Verfügung zu stellen, mit der eine Abtrennung von im Blut gelösten Proteinen bis in den Molekulargewichtsbereich von ca. 2,5 Millionen, ja sogar 3 Millionen möglich ist, d.h. Membranen, die für den Molekulargewichtsbereich von etwa 60.000 bis 2,5 bzw. 3 Millionen für Humanblut einen hohen Siebkoeffizienten aufweisen und die außerdem einen hohen Filtratfluß zulassen. Eine weitere Aufgabe der Erfindung ist es deshalb, Membranen zur Verfügung zu stellen, bei denen der Filtratfluß wenigstens 1/5tel des Blutflusses durch den Filtermodul beträgt, damit die Zeiten der Behandlung des Patienten sowie die Zeit für die Blutspende in einem erträglichen Rahmen bleibt, wobei die Filtratfluß bei einer Druckdifferenz von 0,1 bar bestimmt sind.

Diese Aufgabe wird gelöst durch ein Verfahren zum Herstellen von porösen Hohlfasermembranen in Form einer porösen Polymerhohlfaser mit einem Porenhohlraumanteil von mindestens 70%, einem inneren Faserdurchmesser von 100 bis 550 µm, einer Wandstärke von 15 bis 300 µm, wobei man ein homogenes Gemisch aus mindestens 2 Komponenten, wobei die eine Komponente ein schmelzbares Polymer is und in Mengen von etwa 10 bis 30 Gew.-% vorliegt und die andere Komponente eine gegenüber dem Polymeren inerte Flüssigkeit ist und in Mengen von etwa 70 bis 90% vorliegt und beide Komponenten ein binäres System bilden, das im flüssigen Aggregatzustand einen Bereich völliger Mischbarkeit und einen Bereich mit Mischungslücke aufweist, bei einer Temperatur oberhalb der Entmischungstemperatur durch eine Hohlfaserdüse in ein Spinnrohr extrudiert, das die inerte Flüssigkeit des extrudierten Komponentengemisches enthält, wobei die Flüssigkeit im Spinnrohr eine Temperatur unter der Entmischungstemperatur besitzt und man die Faser und die inerte Flüssigkeit in gleicher Richtung führt und die gebildete Hohlfaserstruktur nach ihrer Verfestigung mit einem Lösungsmittel auswäscht, das dadurch gekennzeichnet ist, daß man um eine Hohlfaser für die Plasmaseparation herzustellen, die einen Siebfaktor für Humanblutproteine im Molekulargewichtsbereich von etwa 60 000 bis 3 000 000 von mindestens 0,7 aufweist, die Faser und die inerte Flüssigkeit mit jeweils etwa gleicher oder nur geringfügig unterschiedlicher linearer Geschwindigkeit durch das Spinnrohr fürt und die Faser sodann unter geringer Spannung aus dem Spinnrohr abzieht.

Vorzugsweise ist das Geschwindigkeitsgefälle zwischen der Faser und der Spinnflüssigkeit beim Durchführen durch das Spinnrohr kleiner als 15%. Es ist in einigen Fällen sogar günstig, wenn Faser und inerte Flüssigkeit durch das Spinnrohr mit gleicher linearer Geschwindigkeit durchgeführt werden.

Zweckmäßig wird die Faser aus dem Spinnrohr mit einer Geschwindigkeit abgezogen, die etwa 5—15% höher ist als die Geschwindigkeit, die sich ohne Abzug beim Austritt der Faser aus dem Spinnrohr einstellt. Dadurch wird die Spannung sehr gering gehalten. Sehr vorteilhaft ist es, wenn man die Faser nach der Verfestigung zur Entfernung der inerten Flüssigkeit einer Druckwäsche unterzieht. Zweckmäßig wird die Faser in paralleler Lage gewickelt und sodann ausgewaschen.

Zweckmäßig ist es, wenn man zwischen Austrittsfläche der Hohlfaserdüse und der Flüssigkeitsoberfläche im Spinnrohr einen Luftspalt einhält, der vorzugsweise eine Länge von 3—5 mm beträgt, also möglichst klein ist.

Gegenstand der Erfindung ist auch eine Hohlfasermembran, die nach einem der obenstehend beschriebenen Verfahren hergestellt worden ist und gekennzeichnet ist durch einen Siebfaktor für Humanblutproteine im Molekulargewichtsbereich von etwa 60 000 bis 3 Millionen von 0,9 bis 1,0.

Besonders vorteilhaft sind Hohlfasermembranen, die gekennzeichnet sind durch einen Siebfaktor für Humanblutproteine im Molekulargewichtsbereich von etwa 1 bis 2,5 Millionen von annähernd 1.

Der Porenhohlraum der Membranen begrägt vorteilhafterweise mindestens 80%. Geeignete Membranen weisen einen inneren Durchmesser von 250—450 µm auf. Die Wandstärke ist vorzugsweise 100—200 µm. Die Membran ist undurchlässig für Blutzellen, nämlich Erythrozyten, Leukozyten und Blutplättchen.

Die Hohlfasermembranen gemäß der Erfindung können einen Filtratfluß von mindestens 1/5tel des Blutflusses durch den Filtermodul, wobei der Filtratfluß bei einer Druckdifferenz von 0,1 bar bestimmt wird, aufweisen.

Zur Herstellung de erfindungsgemäßen Hohlfasermembranen kann man auf folgende Weise vorgehen. Die inerte Flüssigkeit, wozu sich insbesondere NN - Bis - (2 - hydroxyäthyl) - hexadecylamin eignet, wird mit der entsprechenden Menge des Polymers, insbesondere Polypropylen, vermengt, auf die erforderliche Temperatur, z.B. 220°C aufgeheizt, wobei sich Rühren empfiehlt sowie das Anlegtn eines Vakuums, um aus dem Lösungsmittel noch niedermolekulare Bestandteile wie Amine zu entfernen. Nach einer bestimmten Zeit, z.B. 2 Stunden liegt dann eine verarbeitbare homogene zähflüssige Lösung vor.

Außer dem vorzugsweise verwendeten Polypropylen können weitere Hochpolymere insbesondere Polyolefine wie hochmolekulares Polyäthylen, Copolymere des Propylens und Äthylens, Polymere auf der Basis von 3 - Methyl - penten - (1), Polyäthylenchlortrifluoräthylen, das unter dem Handelsnamen Halar erhältlich ist, und Polyäthylensulfid eingesetzt werden.

Bei kontinuierlicher Arbeitsweise ist es empfehlenswert, die Flüssigkeit vorher, d.h. vor dem Lösevorgang durch Evakuieren von den niedermolekularen Bestandteilen zu befreien. Das Polypropylen wird über einen Extruder aufgeschmolzen, erwärmte Flüssigkeit und aufgeschmolzenes Polypropylen werden sodann einem Mischer, z.B. einem Pinmischer zugeführt. Zur besseren Durchmischung empfiehlt es sich noch, das Gemisch durch einen Sintermetallzylinder zu führen.

Die Schmelze, die vorzugsweise unter einem inerten Gas, z.B. Stickstoff aufbewahrt wird, wird sodann der Pumpe, die für die Schmelzeförderung dient, zugeleitet. Als Düse wird eine übliche Hohlfaserdüse verwendet, der ein Filter, insbesondere ein Filter aus Sintermetall vorgeschaltet ist. Zwischen der Austrittsfläche der Düse und der Flüssigkeitsoberfläche im Spinnrohr ist zweckmäßigerweise ein Luftspalt vorhanden, der 3 bis 5 mm groß sein kann. Es sollte also möglichst klein sein, kann in bestimmten Fällen aber auch größere Ausmaße haben, z.B. 30 mm.

Das homogene, eine Temperatur von etwa 220° aufweisende Gemisch wird sodann durch die Hohlfaserdüse extrudiert und tritt nach Durchlaufen des Luftspalts in die im Spinnrohr befindliche inerte Flüssigkeit ein. Die Temperatur der Flüssigkeit im Spinnrohr liegt unterhalb der Entmischungstemperatur des extrudierten Gemisches und beträgt vorzugsweise etwa 30—60°C. Durch die Hohlfaserdüse wird in das Innere der Hohlfaser in an sich bekannter Weise Stickstoff geleitet.

Es ist zweckmäßig, wenn die Menge des eingeleiteten Stickstoffs genau kontrolliert wird. Über die Messung des Stickstoffsverbrauchs ist es möglich, die Gleichmäßigkeit des entstandenen Fadens zu kontrollieren. Unregelmäßigkeiten im Stickstoffverbrauch zeigen nämlich Störungen bei der Faserherstellung wie z.B. zu dünne Faserwände etc. an. Das Spinnrohr wird ständig mit der Flüssigkeit versorgt; ein Überlauf sorgt dafür, daß das Niveau im Spinnrohr stets konstant ist. Die inerte Flüssigkeit un die Hohlfaser werden in gleicher Richtung mit einer Geschwindigkeit von beispielsweise 20 m/min durch das Spinnrohr geleitet. Es ist möglich, die Geschwindigkeit im Spinnrohr durch die Viskosität der inerten Flüssigkeit zu steuern, die man über die Regelung der Temperatur der Flüssigkeit variieren kann. Es hat sich als besonders vorteilhaft gezeigt, wenn man im Spinnrohr Temperaturen zwischen 35 und 70°C einstellt.

Die inerte Flüssigkeit und die Hohlfaser verlassen das Spinnrohr am unteren Ende, wobei die Hohlfaser mit einer Geschwindigkeit abgezogen wird, die nur geringfügig über der Geschwindigkeit liegt, mit der die Faser ohne besonderen mechanischen Abzug das Spinnrohr verlassen würde. Diese Geschwindigkeit kann sehr einfach dadurch bestimmt werden, daß man die Faser unterhalb der Umlenkrolle beim Abziehen leicht durchhängen läßt und die sich dabei ergebende Geschwindigkeit um etwa 5—15% erhöht.

Zum Umlenken ist insbesondere eine kugelgelagerte Umlenkrolle geeignet, die zweckmäßig Rillen aufweist, die dem Fadenquerschnitt angepaßt ist. Es ist günstig, wenn die Oberfläche sehr glatt ist.

Hinter der Umlenkrolle sind zweckmäßig zwei weitere Rollen vorgesehen, die insbesondere vermeiden sollen, daß Schwankungen, die beim Aufwickeln und Abnehmen des Fadens auftreten können, sich ins Spinnrohr fortsetzen. Der Abzug erfolgt vorzugsweise über ein Rollentrio. Die Rollen des Trios können mit Schaumstoff belegt sein, der für eine gute Haftung sorgen und vermeiden soll, daß ein Schlupf auftritt. Die Faser wird sodann einem Tänzerarm zugeführt, der die Faser in paralleler Aufwicklung einem Aufwickelorgan zuführt.

Das Spinnrohr ist zweckmäßig mit einem Mantel umgeben, der einen Temperierflüssigkeit enthält. Die Temperierflüssigkeit weist vorzugsweise eine niedrigere Temperatur auf als die Flüssigkeit am Anfang des Spinnrohrs, dadurch wird die Faser während des Passierens des Spinnrohrs abgekühlt und es wird weiter vermieden, daß die Temperatur innerhalb des Spinnrohrs ansteigt.

Es ist günstig, wenn die Spinndüse gut zentriert ist, damit die Faser nicht an die Wandung des Spinnrohrs gelangt, was was zu Spinnstörungen und Ungleichmäßigkeiten bei der Faser führen kann.

Der Innendurchmesser des mit inerter Flüssigkeit gefüllten Spinnrohrs und der Außendurchmesser der Hohlfaser sollten aufeinander abgestimmt sein, da dadurch die Fließgeschwindigkeit im Rohr beeinflußt werden kann. Zweckmäßig beträgt der Innendurchmesser des Spinnrohrs etwa das 2- bis 10-fache des Außendurchmessers des Hohlfadens.

Die Länge des Spinnrohrs kann in weiten Grenzen variiert werden, günstige Maße liegen im Bereich von 1 bis 3 m, wobei andere Längen jedoch nicht auszuschließen sind.

Es ist zweckmäßig, wenn Austrittsgeschwindigkeit bzw. Fördermenge an der Düse und die Verhältnisse im Spinnrohr so aufeinander abgestimmt sind, daß die Fließgeschwindigkeit von Faser und inerter Flüssigkeit im Spinnrohr etwa 5 bis 25 m/min betragen.

Der Faden wird sodann über einen Tänzerarm auf ein Aufwickelorgan geführt, wobei es zweckmäßig ist, die Faser in paralleler Aufwicklung auf dem Aufwickelorgan, insbesondere auf entsprechenden Spulen abzulegen. Die Faser wird sodann mit einem Lösungsmittel gewaschen, in dem die inerte Flüssigkeit löslich ist. Es ist von Vorteil, wenn die Faser dabei auf den Spulen einer Druckwäsche unterzogen wird. Als Waschflüssigkeit eignet sich insbesondere Äthanol, Isopropanol und Aceton, wobei Äthanol bevorzugt wird.

Es war besonders überraschend, daß die erfindungsgemäßen Hohlfasermembranen sich in so hervorragender Weise bei der Plasmaphorese einsetzen lassen und eine einflache und schnelle Abtrennung von Blutplasma einerseits und Blutkörperchen und Blutplättchen andererseits ermöglichen, ohne daß dabei dem Plasma weitere Stoffe wie Proteine entzogen werden. Es ist möglich, Hohlfasermembranen für die Plasmaphorese herzustellen, die für die meisten Bestandteile des Blutes, außer für die Blutkörperchen und Blutplättchen einen Siebfaktor von annähernd 1 aufweisen. Mit den erfindungsgemäßen Membranen können somit Blutkörperchen wie Erythrozyten, Leukozyten und Blutplättchen vom Blut abgetrennt werden, ohne daß dabei Proteine, die im Plasma gelöst sind, mitabgetrennt werden. Es wird deshalb im Falle der Behandlung von gesundem Blut wertvolles vollständiges Plasma einerseits gewonnen, zum anderen ist es möglich, die Blutkörperchen und Blutplättchen dem Spender direkt wieder zurückzuführen. Man kann selbstverständlich auch auf diese Weise das Plasma dem Spender zurückführen und Blutzellen anreichern und gewinnen.

Dies bringt weiter mit sich, daß das Blutplasma weiteren Fraktionierungen unterworfen werden kann und praktisch alle proteine durch entsprechende Fraktionierungsmethoden aus dem Plasma gewonnen werden können.

der Siebfaktor bleibt über längere Zeit hindurch annähernd konstant.

Es ist ferner möglich, mittels der erfindungsgemäßen Membrane kranken Patienten Toxine, welche an gelöste Proteine gebunden sind, zu entfernen und ihnen gesundes Plasma oder entsprechende andere Lösungen ins Blut zurückzuführen. Die Behandlung kann in äußerst kurzer Zeit durchgeführt werden, so daß Patient oder Spender sich nur eine kurze Zeit der an sich unangenehmen Prozedur des Blutabnehmens zu unterwerfen brauchen.

Die Hohlfasermembran gemäß der Erfindung ist auf äußerst einfache und wirtschaftliche Weise herzustellen, so daß es sich hierbei um einen billigen, jedoch sehr wertvollen Wegwerfartikel handelt. Das umständliche Reinigen und Sterilisieren, wie es bei der Zentrifuge erforderlich ist, fällt bei den Erfindungsgemäßen Membranen weg.

Die Erfindung wird durch folgende Beispiele näher erläutert:

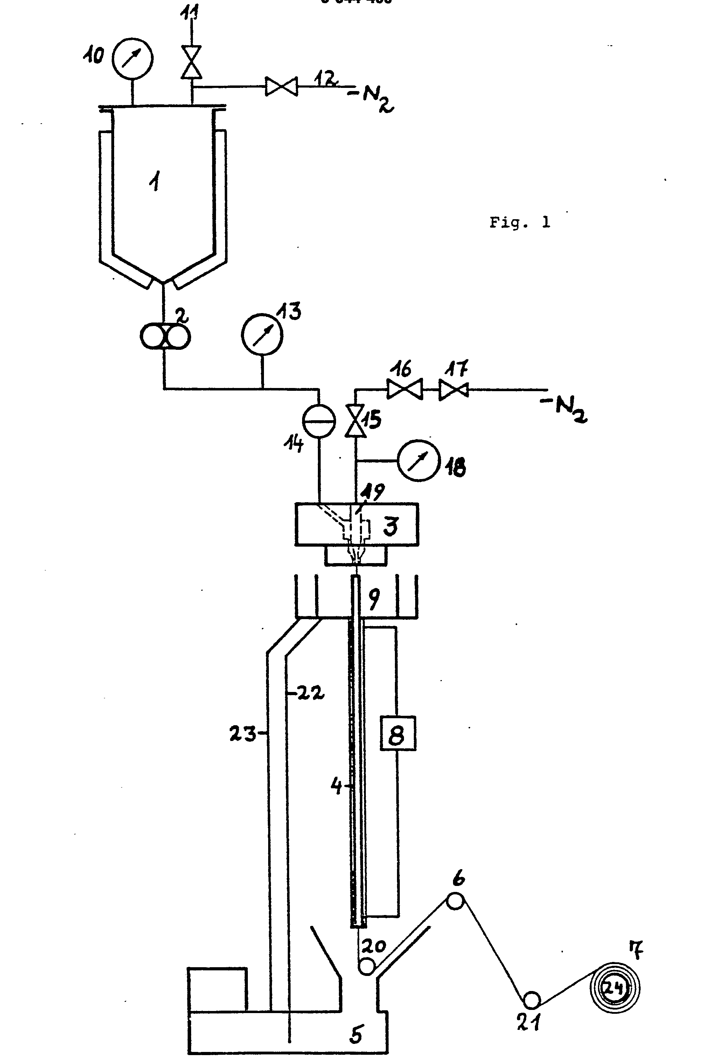

Zur näheren Erläuterung der im Beispiel 1 verwendeten Apparatur dient die schematische Figur 1.

Beispiel 1

1600 g (80 Gew.-%) N,N - Bis - 2 hydroxyäthyl - hexadexylamin (im Folgenden NBN genannt) und 400 g (20 Gew.-%) Polypropylen, Typ PPH 1050 natur, Schmelzindex 1,5, (Höchst AG) werden in einem 4 l Planschliffkolben unter Rühren und einem Vakuum von 20—50 Torr innerhalb einer Stunde auf 220°C erhitzt und eine weitere Stunde gerührt, bis eine homogene Schmelze entsteht.

Die heiße, homogene Schmelze wird anschließend in den auf 200°C aufgeheizten Vorratsbehälter (1) der Kleinspinnapparatur (s. Fig. ) eingefüllt. Die gesamte Spinnapparatur ist vom Behälter bis zur Düse auf von 210°C fallend bis 180°C aufgeheizt. Der Behälter wird dicht verschlossen und mit einem Stickstoffdruck von 1 bar beaufschlagt. Mittels der Zahnradpumpe (2) wird die Schmelze durch das Sintermetallfilter (14) (Porengröße 50—70 µm) in die Hohlfadendüse (3) gefördert und in Form eines Hohlfadens aus der Düse gepreßt. Durch die in der Mitte des Schmelzestroms befindliche Bohrung (19) wird Stickstoff über ein Mikroventil (15) in den Hohlfaden eingeleitet. Zwischen Mikroventil (15) und Düse (3) wird der Stickstoffdruck gemessen und aufgezeichnet. Durch diesen Druckfühler (18), Bereich 0—10 mbar, können Fadenschwankungen und eine Lumenänderung registriert werden.

Die Fadenabmessung wird durch den Schmelzedurchsatz, die Stickstoffzufuhr und die Abzugsgeschwindigkeit eingestellt:

| | |
|---|---|
| Innendurchmesser | =0,3 mm |
| Außendurchmesser | =0,6 mm |
| Wandstärke | =0,15 mm |
| Dichte der Schmelze | =0,89 g/cm³ |
| Schmelzedurchsatz | =4,24 cm³/min |
| | =3,78 g/min |
| Stickstoffzufuhr | =1,41 cm³/min.NB |
| Abzugsgeschwindigkeit | =20 m/min |

Bei einer Düsenbohrung von 1,8 mm und einem Außendurchmesser der Düsennadel von 0,9 mm beträgt die Düsenaustrittsgeschwindigkeit des Fadens 2,7 m/min. Der Faden weist anschließend in ein, im Abstand von 5 mm senkrecht unter der Düse stehendes Spinnrohr (4), das mit NBH gefüllt ist, gesponnen, an der kugelgelagerten Rolle (20) umgelenkt und mittels der Abzugswalze (6) konstant mit 20 m/min abgezogen. Nach der Abzugswalze (6) wird der Faden mit der Aufwickelmaschine (7) parallel auf einer perforierten Scheibenspule (24) aufgewickelt. Die Aufspulgeschwindigkeit wird über den Tänzerarm (21) geregelt. Das durch das Spinnrohr fließende NBH wird in dem Thermostat (5) auf 50°C temperiert und durch die Leitung (22) über einen Überlauftrichter (9) in das Spinnrohr (4) gepumpt. Das überschüssige NBH fließt über die Leitung (23) in den Thermostat (5) zurück. Das Spinnrohr (4) hat einen Innendurchmesser von 5 mm und ist 2,30 m lang. Es ist ein doppelwandiges Rohr, das auf eine Länge von 2 m mit dem Thermostaten (8) auf 35°C gekühlt wird.

Die Schmelzetemperatur beträgt bei Düsenaustritt ca. 180°C. Unter den vorgenannten Bedingungen liegt die Strömungsgeschwindigkeit im Spinnrohr (4) bei 16 bis 17 m/min.

Um gesichert spinnen zu können, ohne daß der Faden an der Umlenkrolle (20) des Spinnrohres durchhängt, wird er mit 20 m/min abgezogen.

Der auf einer perforierten Scheibenspule (24) aufgewickelte Hohlfaden (a. 4 km/Spule) wird anschließend durch Druckwäsche 3 Std. mit Äthanol gewaschen, wobei die Spule bei einem Druck von 0,5 bis 0,8 bar mit 5 bis 8 l Äthanol/min durchspült wird.

Beispiel 2

Hohlfasern nach Beispiel 1 wurden zusammengerafft zu einem Bündel von ca. 2000 Fäden, 30 cm lang und in ein rohrförmiges Gehäuse mittels Polyurethan flüssigkeitsdicht an beiden kopfenden eingegossen.

Dieser Filtermodul mit einer aktiven Filterfläche von 0,3 m² wurde von Humanplasma von 50 ml/min durchströmt. Der transmembrane Druck wurde auf 50 mm Hg mittels Klemme am Ausgang eingestellt. Dem Filtrat, das in einer Menge von 15 ml/min anfiel, wurde in zeitlichen Abständen von 10 min kleine Proben zur Konzentrationsbestimmung der Proteine entnommen, während der Haiptanteil jeweils wieder in den Anfangsbeutel zurückgeführt wurde. In den Filtratproben wurden mittels Lasernephelometrie die Humanproteine quantitativ bestimmt und mit den Konzentrationen im Plasma verglichen, um den Siebkoeffizienten zu bestimmen. Es ergaben sich die folgenden Werte:

$$S_{Albumin} = 0,98$$

$$S_{IgG} = 0,92$$

$$S_{IgM} = 0,90$$

$$S_{\beta Lipoprotein} = 0,96$$

Der zeitliche Verlauf wurde für β Lipoprotein allein bestimmt mit folgendem Ergebnis:

| | S |
|---|---|
| Nach 10 min | 0,98 |
| Nach 20 min | 0,96 |
| Nach 30 min | 0,95 |
| Nach 40 min | 0,93 |
| Nach 50 min | 0,90 |
| Nach 60 min | 0,89 |
| Nach 120 min | 0,90 |

Blutzellen konnten im Filtrat nicht nachgewiesen werden.

Beispiel 3

Aus Hohlfasern nach Beispiel 1 wurde ein kleiner Testmodul von 100 cm², 20 cm lang, gebaut, der mit einer frischen Humanblutkonserve mit 3 ml/min im single pass durchströmt wurde.

Das Filtrat wurde 60 min lang gesammelt und dann auf seine Proteinbestandteil hier untersucht. Die Siebfaktoren waren wie folgt:

| | |
|---|---|
| Albumin | 0,95 |
| IgG | 0,91 |
| IgA | 0,90 |
| α 2 Macroglubulin | 0,91 |
| IgM | 0,94 |
| β Lipoprotein | 0,96 |

An den Siebfaktoren erkennt man, daß die Proteine fast vollständig die Membranwand passierten. Im Filtrat waren keine Blutzellen vorhanden.

**Patentansprüche**

1. Verfahren zum Herstellen von porösen Hohlfasermembranen in Form einer porösen Polymerhohlfaser mit einem Porenhohlraumanteil von mindestens 70%, einem inneren Faserdurchmesser von 100 bis 550 μm, einer Wandstärke von 15 bis 300 μm, wobei man ein homogenes Gemisch aus mindestens 2 Komponenten, wobei die eine Komponente ein schmelzbares Polymer ist und in Mengen von etwa 10 bis 30 Gew.-% vorliegt und die andere Komponente eine gegenüber dem Polymeren inerte Flüssigkeit ist und in Mengen von etwa 70 bis 90% vorliegt und beide Komponenten ein binäres System bilden, das im flüssigen Aggregatzustand einen Bereich völliger Mischbarkeit und einen Bereich mit Mischungslücke aufweist, bei einer Temperatur oberhalb der Entmischungstemperatur durch eine Hohlfaserdüse in ein Spinnrohr extrudiert, das die inerte Flüssigkeit des extrudierten Komponentengemisches enthält, wobei die Flüssigkeit im Spinnrohr eine Temperatur unter der Entmischungstemperatur besitzt und man die Faser und die inerte Flüssigkeit in gleicher Richtung führt und die gebildete Hohlfaserstruktur nach ihrer Verfestigung mit einem Lösungsmittel auswäscht, dadurch gekennzeichnet, daß man um eine Hohlfaser für die Plasmaseparation herzustellen, die einen Siebfaktor für Humanblutproteine im Molekulargewichtsbereich von etwa 60 000 bis 3 000 000 von mindestens 0,7 aufweist, die Faser und die inerte Flüssigkeit mit jeweils etwa gleicher oder nur geringfügig unterschiedlicher linearer Geschwindigkeit durch das Spinnrohr führt und die Faser sodann unter geringer Spannung aus dem Spinnrohr abzieht.

2. Verfahren nach Anspruch 1, dadurch gekennzeichnet, daß das Geschwindigkeitsgefälle zwischen der Faser und der inerten Flüssigkeit beim Durchführen durch das Spinnrohr kleiner als 15% ist.

3. Verfahren nach Anspruch 1, dadurch gekennzeichnet, daß Faser und inerte Flüssigkeit durch das Spinnrohr mit gleicher linearer Geschwindigkeit durchgeführt werden.

4. Verfahren nach einem der Ansprüche 1 bis 3, dadurch gekennzeichnet, daß man die Faser mit einer Geschwindigkeit aus dem Spinnrohr abzieht, die etwa 5 bis 15% höher ist als die sich ohne Abzug beim Austritt der Faser aus dem Spinnrohr einstellende Geschwindigkeit.

5. Verfahren nach einem der Ansprüche 1 bis 4, dadurch gekennzeichnet, daß man die Faser nach der Verfestigung zur Entfernung der inerten Flüssigkeit einer Druckwäsche unterzieht.

6. Verfahren nach einem der Ansprüche 1 bis 5, dadurch gekennzeichnet, daß man die Faser in paralleler Lage wickelt und auswäscht.

7. Verfahren nach einem der Ansprüche 1 bis 6, dadurch gekennzeichnet, daß man zwischen Austrittsfläche der Hohlfaserdüse und der Flüssigkeitsoberfläche im Spinnrohr einen Luftspalt einhält.

8. Verfahren nach Anspruch 7, dadurch gekennzeichnet, daß die Länge des Luftspalts 3 bis 5 mm beträgt.

9. Verfahren nach einem der Ansprüche 1 bis 8, dadurch gekennzeichnet, daß man als schmelzbares Polymer Polypropylen verwendet.

10. Hohlfasermembran, hergestellt nach einem Verfahren nach einem der Ansprüche 1 bis 9, gekennzeichnet durch einen Siebfaktor für Humanblutproteine im Molekulargewichtsbereich von etwa 60 000 bis 3 000 000 von 0,9 bis 1,0.

11. Hohlfasermembran, hergestellt nach einem Verfahren gemäß einem der Ansprüche 1 bis 9, gekennzeichnet durch einen Siebfaktor für Humanblutproteine im Molekulargewichtsbereich von etwa 1 bis 2,5 Millionen von annähernd 1.

12. Hohlfasermembran nach einem der Ansprüche 10 bis 11, gekennzeichnet durch eine Undurchlässigkeit für Blutzellen.

13. Hohlfasermembran nach einem der Ansprüche 10 bis 12, gekennzeichnet durch einen Filtratfluß von mindestens 1/5tel des Blutflusses durch den Filtermodul, wobei der Filtratfluß bei einer Druckdifferenz von 0,1 bar bestimmt wird.

## Revendications

1. Procédé de préparation de membranes poreuses en fibres creuses sous la forme d'une fibre poreuse creuse en polymère ayant un taux de porosité d'au moins 70%, un diamètre intérieur de fibre de 100 à 550 µm, une épaisseur de paroi de 15 à 300 µm, dans lequel on prépare un mélange homogène d'au moins 2 composants, l'un des composants étant un polymère fusible présent en quantité d'environ 10 à 30% en poids, l'autre composé étant un liquide inerte vis-à-vis du polymère, présent en quantité d'environ 70 à 90%, les deux composants formant un système binaire qui, à l'état liquide, présente un domaine de miscibilité complète et un domaine de non-miscibilité, et on extrude ce mélange, à une température supérieure à la température de démixtion, à travers une buse à fibres creuses dans un tube de filage, qui contient le liquide inerte du mélange de composants extrudé, le liquide dans le tube de filage ayant une température inférieure à la température de démixtion, et on fait aller la fibre et le liquide inerte dans la même direction et on lave la structure de fibre creuse formée avec un solvant après qu'elle se soit solidifiée, caractérisé en ce que, pour préparer une fibre creuse pour la séparation du plasma qui présente un facteur de tamis d'au moins 0,7 pour les protéines du sang humain ayant un poids moléculaire allant d'environ 60 000 jusqu'à environ 3 000 000, on fait passer dans le tube de filage la fibre et le liquide inerte avec des vitesses linéaires sensiblement égales ou ne différant que de peu, et l'on tire ensuite la fibre hors du tube de filage sous faible tension.

2. Procédé selon la revendication 1, caractérisé en ce que la différence de vitesse entre la fibre et le liquide inerte lors du parcours à travers le tube de filage est inférieure à 15%.

3. Procédé selon la revendication 1, caractérisé en ce que la fibre et le liquide inerte sont conduits à travers le tube de filage à la même vitesse linéaire.

4. Procédé selon l'une des revendications 1 à 3, caractérisé en ce que l'on tire la fibre hors du tube de filage à une vitesse supérieure d'environ 5 à 15% à la vitesse de sortie sans tirage de la fibre hors du tube de filage.

5. Procédé selon l'une des revendications 1 à 4, caractérisé en ce que l'on soumet la fibre, après solidification, à un lavage sous pression pour éliminer le liquide inerte.

6. Procédé selon l'une des revendications 1 à 5, caractérisé en ce que l'on enroule la fibre en couche parallèle et on la lave.

7. Procédé selon l'une des revendications 1 à 6, caractérisé en ce que l'on introduit une fente d'aération entre la surface de sortie de la buse à fibre creuse et la surface supérieure du liquide dans le tube de filage.

8. Procédé selon la revendication 7, caractérisé en ce que la longueur de la fente d'aération est de 3 à 5 mm.

9. Procédé selon l'une des revendications 1 à 8, caractérisé en ce que l'on utilise du polypropylène en tant que polymère fusible.

10. Une membrane en fibre creuse, préparée selon un procédé selon l'une des revendications 1 à 9, caractérisée par un facteur de tamis allant de 0,9 à 1,0 pour les protéines du sang humain dont le poids moléculaire se trouve dans le domaine compris entre environ 60 000 et environ 3 000 000.

11. Une membrane en fibre creuse, préparée selon un procédé selon l'une des revendications 1 à 9, caractérisée par un facteur de tamis voisin de 1, pour les protéines du sang humain ayant un poids moléculaire compris dans le domaine allant de 1 à 2,5 millions environ.

12. Une membrane en fibre creuse selon l'une des revendications 10 à 11, caractérisée par une imperméabilité aux cellules du sang.

13. Une membrane en fibre creuse selon l'une des revendications 10 à 12, caractérisée par un écoulement du filtrat d'au moins 1/5ème de l'écoulement de sang à travers le module filtrant, l'écoulement du filtrat étant déterminé par une différence de pression de 0,1 bar.

**Claims**

1. A process for the production of porous hollow-fiber membranes in the form of a porous polymer hollow fiber having a pore void content of at least 70%, an internal fiber diameter of from 100 to 550 µm and a wall thickness of from 15 to 300 µm, a homogeneous mixture of at least 2 components, of which one is a fusible polymer and is present in quantities of from about 10 to 30% by weight and the other is a liquid optionally inert to the polymer and is present in quantities of from about 70 to 90% and both components form a binary system which, in the liquid aggregate state, has a range of complete miscibility and a range with a miscibility gap, being extruded at a temperature above the separation temperature through a hollow-fiber nozzle into a spinning tube containing the inert liquid of the extruded component mixture, the liquid in the spinning tube having a temperature below the separation temperature, and the fiber and the inert liquid being guided in the same direction and the hollow-fiber structure formed being washed with a solvent after it has solidified, characterized in that, to produce a hollow fiber for plasma separation having a sieve factor for human blood proteins in the molecular weight range of from about 60,000 to 3,000,000 of at least 0.7, the fiber and the inert liquid are guided through the spinning tube at substantially the same or at only a slightly different linear velocity and the fiber is subsequently withdrawn from the spinning tube under low tension.

2. A process as claimed in Claim 1, characterized in that the velocity gradient between the fiber and the inert liquid as they pass through the spinning tube is less than 15%.

3. A process as claimed in Claim 1, characterized in that the fiber and the inert liquid are guided through the spinning tube at the same linear velocity.

4. A process as claimed in any of Claims 1 to 3, characterized in that the fiber is withdrawn from the spinning tube at a velocity approximately 5 to 15% higher than that at which the fiber would exit from the spinning tube in the absence of withdrawal.

5. A process as claimed in any of Claims 1 to 4, characterized in that, after solidification, the fibers are pressure-washed to remove the inert liquid.

6. A process as claimed in any of Claims 1 to 5, characterized in that the fibers are wound and washed in parallelism.

7. A process as claimed in any of Claims 1 to 6, characterized in that an air gap is maintained between the exit orifice of the hollow-fiber nozzle and the surface of the liquid in the spinning tube.

8. A process as claimed in Claim 7, characterized in that the air gap is from 3 to 5 mm long.

9. A process as claimed in any of Claims 1 to 8, characterized in that polypropylene is used as the fusible polymer.

10. A hollow-fiber membrane produced by the process claimed in any of Claims 1 to 9, characterized by a sieve factor for human blood proteins in the molecular weight range of from about 60,000 to 3,000,000 of from 0.9 to 1.0.

11. A hollow-fiber membrane produced by the process claimed in any of Claims 1 to 9, characterized by a sieve factor for human blood proteins in the molecular weight range of from about 1 to 2.5 million of approximately 1.

12. A hollow fiber membrane as claimed in Claim 10 or 11, characterized by an impermeability to blood cells.

13. A hollow fiber membrane as claimed in any of Claims 10 to 12, characterized by a filtrate flow of at least one fifth of the blood flow through the filter module, the filtrate flow being determined at a pressure difference of 0.1 bar.

Fig. 1